Europäisches Patentamt

European Patent Office

Office européen des brevets

(11) Publication number: **0 437 866 B1**

# EUROPEAN PATENT SPECIFICATION

(45) Date of publication of patent specification: **05.07.95**   (51) Int. Cl.⁶: **B23D  35/00**, B23D 15/08

(21) Application number: **90200133.8**

(22) Date of filing: **18.01.90**

(54) **Shear for shearing laminar elements, or the like.**

(43) Date of publication of application:
**24.07.91 Bulletin  91/30**

(45) Publication of the grant of the patent:
**05.07.95 Bulletin  95/27**

(84) Designated Contracting States:
**AT BE CH DE DK ES FR GB GR LI LU NL SE**

(56) References cited:
**CH-A- 492 505**
**US-A- 1 814 513**

(73) Proprietor: **FIMI S.p.A. FABBRICA IMPIANTI MACCHINE INDUSTRIALI**
**Via dell'Industria 1**
**I-22060 Vigano (Como) (IT)**

(72) Inventor: **Parigi, Marcello**
**Via J. Palach 10**
**I-20090 Segrate, Milan (IT)**
Inventor: **Rovelli, Pompeo**
**Via M. Rosa 2**
**I-22062 Barzano, Como (IT)**

(74) Representative: **Fusina, Gerolamo et al**
**Ing. Barzanò & Zanardo Milano S.p.A,**
**Via Borgonuovo, 10**
**I-20121 Milano (IT)**

## Description

The present invention relates to a shear with rotary blades for shearing laminar elements, or the like, which shear comprises at least one pair of blade-holders and the relevant blades relatively mobile according to parallel straight lines spaced apart from each other by a distance computed as a function of the thickness and of the nature of the material to be shorn, with said blades being provided with cutting edges at which, at the shearing time a pair of mutually perpendicular forces Fx and Fy are applied, with this latter force Fy acting alond a straight line perpendicular to the plane on which the material to be shorn is laid, according to which straight line the movement takes place of the blade-holder.

At present, an extremely wide range of shearing machines are available from the market, which are different from one another according to the structure of the component organs.

However, from the standpoint of the shearing action, all of the shears can be substantially subdivided into two types, i.e., the shears of the guillotine type, and the shears of the rotary type. A shear of rotary type is known from US-A-1 814 513, such document shows a pair of blades translating in synchronism along a circular trajectory, so as to cooperate with each other at the shearing line.

In both of the above types of shears, the shearing action takes place substantially owing to the movement of sliding of the one blade relatively to the other one according two directions parallel to each other and simultaneously perpendicular to the plane on which the material to be shorn is laid.

During the shearing, the distance between the straight lines according to which the two blades move relatively to each other should remain as constant as possible, and, in order to attain this result, in the shearing machines known from the prior art, the blade-holders are given a stiff structure by means of suitable strengthening elements, so as to counteract the two mutually perpendicular forces $F_x$ and $F_y$. These strengthening elements should display the maximum value of their moment of inertia in the direction of the relevant force, and they cause the relevant blade-holders to become particularly large and heavy.

This circumstance creates considerable hindrances to the increase in shearing machines throughput, a matter of fact, this, which is particularly burdensome in case of shears of rotary type, and severely jeopardizes the productivity rate of the production lines in which these shearing machines are installed.

In order to obviate this drawback, one could think of replacing the presently installed motor means with other, more powerful, motor means with simultaneously generally strengthening the shearing machine, so as to enable the machine to exceed determined operating speeds.

Such a solution is not recommended, in that a more powerful motor means is also a more weighing one from a dynamic viewpoint, and therefore the added power would be most used in order to overcome its own inertial reactions during the acceleration and deceleration steps.

The purpose of the present invention is of providing a shear, in particular of the rotary type, which is capable of obviating the above said drawbacks, i.e., is capable of displaying -- at the shearing time -- a higher stiffness of the blade-holders than as offered by the blade-holders of the traditional shears with the mass of said blade-holders being the same, i.e., a shear in which, with the stiffness of the blade-holders -- at the shearing time -- being the same, the mass of said blade-holders is considerably smaller than of the blade-holders the traditional shearing machines are equipped with, thus making it possible the operating speed of the shear, and therefore the throughput of the line in which the shear is possibly installed, to be considerably increased.

Such purposes are achieved by a shear for shearing laminar elements, or the like, of the initially defined type, with the features of the characterising part of claim 1.

The advantages resulting from the present invention essentially consist in that, inasmuch as said invention makes it possible light, powerful shears to be used, the presently reached productivity limits can be overcome, with considerable benefits for the production line of which the shearing machine possibly constitutes one of the component elements.

The invention is disclosed for merely exemplifying, non-limitative, purposes, by referring to the figures of the hereto attached drawing tables, in which:

Figure 1 shows a schematic side view of the cutting elements of a traditional shear;

Figure 2 shows a perspective view of a correctly shorn edge of a metal sheet;

Figure 3 shows a schematic side view of the shear-holder of a shear of the rotary type accomplished according to the instant invention, shown during the shearing step;

Figure 4 shows a schematic view of the cutting elements of the shear according to the instant invention;

Figure 5 shows a schematic side view of a rotary shear equipped with blade-holders of roll type, accomplished according to the teachings of the present invention;

Figure 6 shows a schematic view of a rotary shear with roll shear-holders of traditional type.

It should be observed here that the figures and the graphic representations of the concerned forces have not been strictly made in scale, in order to improve the understanding of the invention.

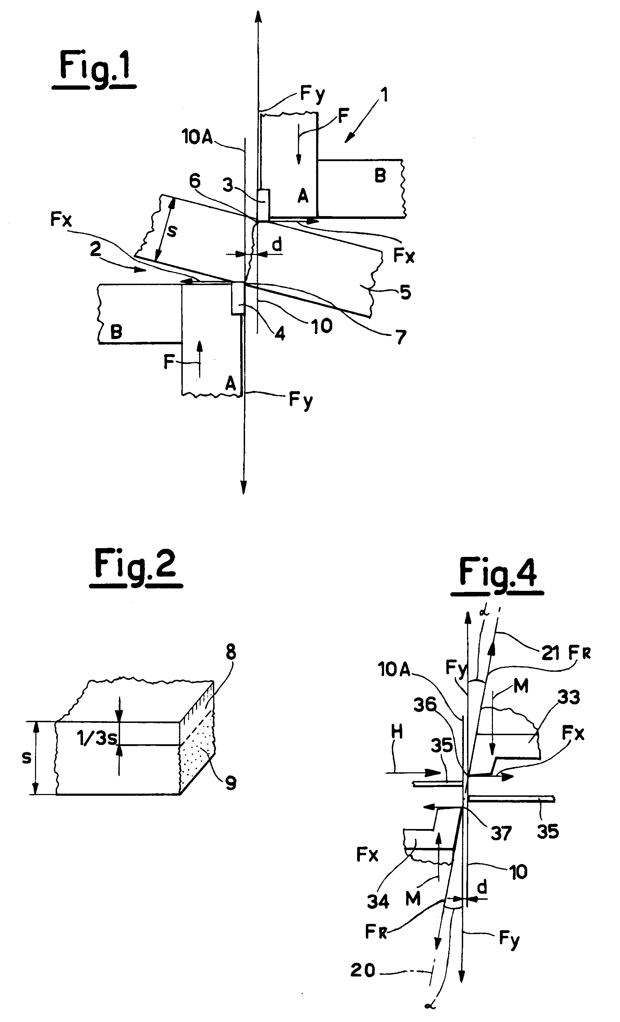

In order to better understand the technical problem solved by the present invention, the dynamics of the shearing action performed by the traditional shear are illustrated first, with the aid of Figures 1 and 2.

The cutting elements of a shear traditionally comprise an upper blade-holder 1 and a lower blade-holder 2, respectively supporting an upper blade 3 and a lower blade 4, suitable for operating, e.g., on a metal sheet 5 of thickness "s". The blades 3 and 4, which usually are of the added type in order to make it possible them to be rapidly replaced when they are worn out, are respectively provided with straight cutting edges 6 and 7 so lengthwise inclined, as to favour the cutting action. The lengthwise development of the cutting edges 6 and 7 and their inclination along said lenghtwise development are not visible in the figures.

During the shearing action the blades 3 and 4, as well as their respective blade-holders 1 and 2 move relatively to each other (arrows "F") along parallel straight lines 10 and 10A, spaced apart from each other by a distance "d" and substantially perpendicular to the plane on which the metal sheet 5 is laid.

The distance "d" is preset by those skilled in the art as a function of the thickness "s" of the metal sheet, and is generally a function of said thickness according to the well-known relationship:

d = (from 0.07 to 0.10).s

which optimises the shearing action.

The respect of such a distance "d" is essential in order that a correct shearing -- i.e., without burrs being formed --, as shown in Figure 2, may be obtained.

In said Figure 2, one can substantially see a first, peripheral section 8, of a height substantially equal to 1/3rd of the thickness "s" of the metal plate, in which the cutting took place by plastic deformation of the metal caused by the cutting edges 6 and 7, and a second portion 9, in which the cutting took place by slipping/fracture of the molecular planes, hence without any burrs being formed.

If for the distance between the blades "d" a wrong value is selected, with the thickness of the material to be shorn being not taken into due consideration, negative phenomena occur, which negatively affect the cutting action. Such negative phenomena are not described herein, in that they are well-known to those skilled in the art. It results that it is necessary that during the cutting action said distance "d" should remain as constant as possible along the whole length of the cutting edges 6 and 7, a feature which cannot be achieved if, e.g., a bending occurs of the blade and of the blade-holder under the effect of the shearing stresses. In order to obviate such a drawback, in the shears known from the prior art, whether of guillotine or of rotaty type, both of the blade-holders are therefore given a particularly stiff structure both on the vertical plane, in order to counteract the vertical force $F_y$, and on the horizontal plane, in order to counteract the horizontal force $F_x$.

The vertical force $F_y$ has an extremely high value and therefore tends to deform the blades by causing them to bend on a vertical plane. However, relatively high values of such a bending do not endanger the cutting, because the blades compensate for them by means of their natural downwards movement along a vertical trajectory, according to the direction of the arrow "F". The horizontal force $F_x$ is of a relatively low value, but it tends anyway to deform the blades by causing them to bend on a horizontal plane parallel to the plane on which the metal sheets is laid.

However, even relatively small values of such a bending on the horizontal plane irreparably jeopardize the quality of the cut, so that the maximal deformation allowed for the blade-holders in the direction of the force $F_x$ is much smaller than the maximal deformation allowed for the same blade-holders in the direction of the arrow $F_y$. Usually, a bending is allowed in the horizontal plane, the extent of which is 1/10th of the bending extent allowed in the vertical plane.

Therefore, in the shearing machines according to the prior art, each blade-holder has to be equipped with two strengthening structures (indicated by the reference letters "A" and "B" in Figure 1), respectively equal for both blade-holders, each of which structures counteracts one of the two forces generated at the shearing time.

The mass of the "A" structure is large, because it has to counteract a considerably large force $F_y$; and the mass of the "B" structure is also large, in that --although it has to counteract a force $F_x$ which is smaller than the force $F_y$ -- it should reduce to values as small as possible any bending deformations along the whole length of the blade-holder, which is at least equal to the width of the metal sheet to be shorn.

The structural typologies of the "A" and "B" structures may vary according to the type of the shearing machine, and according to the manufacturer thereof; in any case, they should however necessarily share the geometric characteristic of displaying their maximum moment of inertia in the direction of the relevant force.

According to the present state of the art, a good shearing machine is therefore necessarily equipped with large-mass blade-holders, in that the values of their moments of inertia, and therefore of stiffness, should be high along two directions perpendicular to each other.

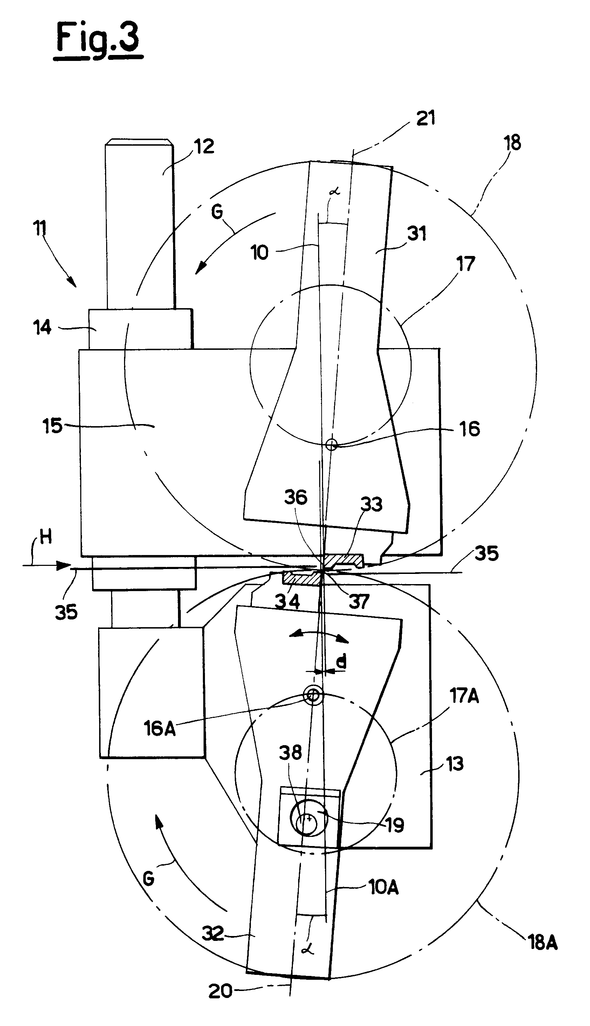

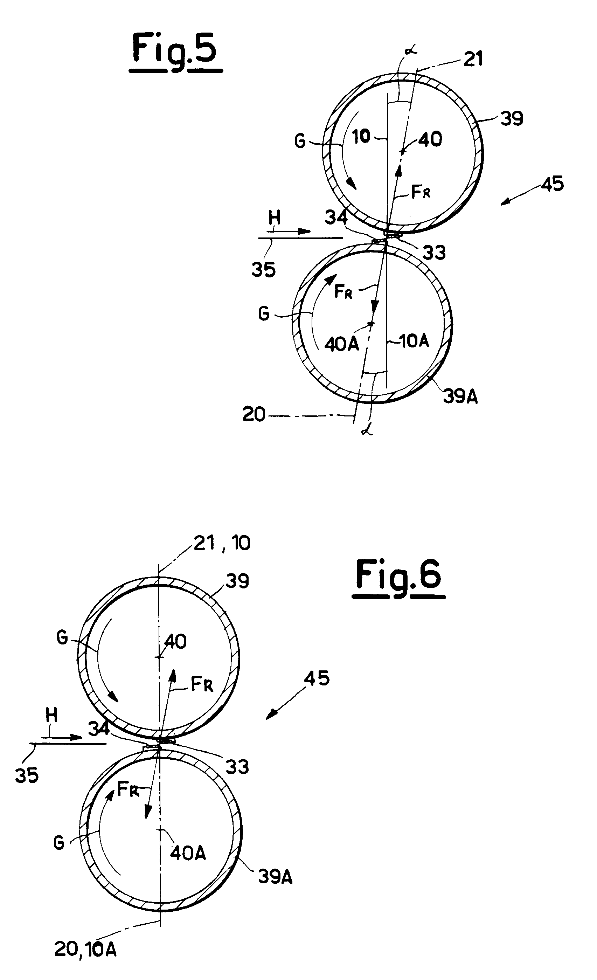

Referring in particular to Figures 3 and 4, a shear according to the present invention, generally indicated by the reference numeral 11, is of the type with rotary blades and comprises a guide column 12, an end of which is integrally fastened to a first bracket element 13 destined to support a lower blade-holder 32, whose main axis is indicated by the reference numeral 20. On the column 12 a sleeve 14 slides, which makes a part of a second bracket element 15 with which an upper blade-holder 31 with main axis 21 is integral. The blade-holders 31 and 32 respectively support an upper blade 33 and a lower blade 34, with cutting edges 36, 37 engaging, during the shearing step, a metal sheet 35 which is being fed in the direction of the arrow "H". The bracket elements 13 and 14 are integral, through crank pins 16 and 16A running along circular trajectories 17 and 17A, with gear wheels 18 and 18A, which gear wheels are each driven by a motor means of its own (not shown in the figures), so as to revolve according to the respective arrow "G".

Said motor means are governed by means of one single microprocessor circuit, and the gear wheels 18 and 18A are inmeshed with each other, thus securing their necessary synchromism.

By simultaneously varying the revolution speed of said motor means by a same value, the revolution speed of said blade-holders 31 and 32 is varied. The metal sheet 35 traveling according to a constant-speed rectilinear movement in the direction of the arrow "H" will be consequently shorn into sheets of different lengths.

In the shear 11 according to the present invention the shearing of the metal sheet 35 is obtained by means of a relative movement (arrow "M") of both of said blade-holders 31 and 32 relatively to each other according to the same mutually parallel straight lines 10 and 10A, spaced apart by the necessary distance "d" and perpendicular to the plane on which the metal sheet 35 is laid.

But both of said blade-holders 31 and 32 result to be so oriented, that their respective main axes 21 and 20 coincide with a half-line along which a force $F_R$ isapplied, which is the resultant from the vectorial composition of the forces $F_x$ and $F_y$ which are generated at the shearing time.

In such a way, the blade-holders are subject to one single bending stress, due to the resultant force $F_R$, and the resisting section of each blade-holder is given such a structure that said blade-holders will show their highest moment of inertia against said single bending stress.

In more concrete terms, such a matter of fact results into the blade-holders 31 and 32 being not equipped with the strengthening structures -- inasmuch as such structures are now useless -- as indicated by the reference letter "B" in Figure 1, typical for the blade-holders of the shears according to the prior art; and into said blade-holders being slim and having their own main axis 21 and 20 orientated at an angle α of approximately from 10 to 8° relatively to the straight lines 10 and 10 A perpendicular to the plane on which the metal sheet 35 is laid, it being anyway confirmed that for the purposes of the shearing, the relative positions and movements relatively to the metal sheet 35 of the blades 33, 34 supported by said blade-holders 31 and 32 are identical to those of a traditional shear.

In case of non-metal materials, the angle α may reach values of values of up to 20°. The relative positions and movements of the blades 33, 34 relatively to the sheet 35 remain unchanged in that they are suggested by the prior art in order to fulfil the necessary conditions for the shearing to be correctly executed.

At least one of the blade-holders 31, 32, and in particular the lower blade-holder 32, is associated with means which make it possible the distance "d" existing between the blades 33, 34 to be adjusted by varying the value of the angle α of inclination of the same blade-holder, relatively to the bracket element 13 which supports it.

Such adjustment means comprise an eccentric 38 hinged onto the bracket element 13, motor driven and revolving at the adjustment time, inside a hollow 19 provided on the blade-holder 32.

The possibility of varying the distance "d" is provided in order to make due allowance for the changes in cutting parameters, such as, e.g., the nature of the material, and/or the thickness thereof.

The teachings according to the instant invention are also advantageously applicable to guillotine shears, as well as to rotary shears equipped with shear-holders of roll type, as generally indicated by the reference numeral 45.

In case of shears of guillotine type, just inclining by the angle α the mobile blade-holder only, and consistently structurally lightening it, can be enough.

On the contrary, as regards the stationary blade-holder, on considering the absence of forces of inertia, varying the traditional position thereof relatively to the shearing forces, also reducing the mass thereof, is not essential for the purposes of the invention.

In case of rotary shears 45 (reference is made to Figures 5 and 6), they use roll blade-holders, respectively indicated by the reference numerals 39 (the upper blade-holder) and 39A (the lower blade-holder), revolving around the axes 40 and 40A, as shown in Figure 5, in which same reference numerals have been used in order to indicate elements corresponding to those as already mentioned.

In particular, by comparing Figure 5, which shows a rotary shear equipped with blade-holders of roll type modified according to the teachings of the present invention, to Figure 6, showing a rotary shear equipped with traditional blade-holders of roll type as known from the prior art, one can observe that the roll blade-holders of this latter shear are also stressed by a twisting torque $M_t$ having its pole on the axis of revolution 40, 40A of the rolls. This twisting torque deforms the cutting edges on the horizontal plane leading to an increase in said distance "d".

In the shear shown in Figure 5, on the contrary, said twisting torque $M_t$ is not generated, in that the resultant force $F_R$ deriving from the vectorial composition of the forces $F_x$ and $F_y$ passes through the revolution axes 40, 40A and its direction is the same as of the main axes (20, 21).

**Claims**

1. Shear with rotary blades, for shearing laminar elements (35) or the like, comprising:
   - a guide column (12), an end of which is integrally fastened to a first bracket element (13) destined to support a lower blade-holder (32) having a main axis (20), said lower blade-holder (32) having a lower blade (34) comprising a lower cutting edge (37);
   - a sleeve (14), sliding on said column (12), which makes a part of a second bracket element (15) with which an upper blade-holder (31) is integral, said upper blade-holder (31), having a main axis (21), and an upper blade (33) comprising an upper cutting edge (36), said first (13) and second (15) bracket elements being integral, through respective crank pins (16A and 16) running along circular trajectories (17A and 17), with gear wheels (18A and 18) which gear wheels (18A and 18) are driven by a motor means of its own, so that said upper (33) and lower (34) blades are relatively movable along straight lines (10, 10A) substantially parallel to each other and spaced apart from each other by a distance (d) computed as a function of the thickness (s) and of the nature of the material to be shorn, a pair of perpendicular forces Fx and Fy being applied to the cutting edges (36, 37), wherein the force Fy acts along the straight lines (10, 10A) perpendicular to the plane on which the material (35) to be shorn is laid, characterised in that the angle ($\alpha$) of inclination of the main axes (21, 20) of the blade-holders (31, 32 and 39, 39A) relatively to mutually parallel straight lines (10, 10A) perpendicular to the plane on which the metal sheet (35) is laid, is comprised within the range of 10° to 8°, so that said blade holders (31, 32) establish the maximum value of their moment of inertia during bending in one direction only, said direction being coincident with the direction of the force Fr which is the resultant deriving from the vectorial composition of the forces Fx and Fy.

2. Shear according to claim 1, characterised in that the blade-holders (31, 32 and 39, 39A) constitute a part of a shear of rotary type (11, 45) for shearing a metal sheet (35), in which both the lower blade-holder (32, 39A) and the upper blade-holder (31, 39) have their main axis (20, 21) coincident with the direction of the resultant force $F_R$.

3. Shear according to claim 1, characterized in that the angle ($\alpha$) of inclination of the main axes (21, 20) of the blade-holders (31, 32 and 39, 39A) relatively to the mutually parallel straight lines (10, 10A) perpendicular to the plane on which a non-metal material to be shorn is laid, may reach values of up to 20°.

4. Shear according to claim 2, characterized in that at least one of said blade-holders (32) is associated with means (18, 19) for adjusting the distance "d" existing between the two blades (33, 34).

5. Shear according to claim 5, characterized in that the adjustment of the distance "d" existing between the blades (33, 34) is obtained by changing the value of the angle ($\alpha$) of inclination by means of an eccentric (18), which, at the adjustment time, rotates inside the interior of a hollow (19) provided on the lower blade-holder (32).

6. Shear according to one or more of the preceding claims, and equipped with blade-holders (39, 39A) of the roll type, revolving relatively to revolution axes (40, 40A), characterized in that both the lower blade-holder (39A) and the upper blade-holder (39) have their respective main axis (20, 21) coincident with the direction of the resultant force $F_R$ passing trhough the revolution axes (40 and 40A).

## Patentansprüche

1. Schneidvorrichtung mit rotierenden Klingen, zum Schneiden von laminierten Elementen (35) oder dgl., umfassend:
   - eine Führungssäule (12), von welcher ein Ende einstückig an einem ersten Klammerelement (13) festgelegt ist, welches zum Abstützen eines unteren Klingenhalters (32) mit einer Hauptachse (20) bestimmt ist, welcher untere Klingenhalter (32) eine untere Klinge (34) umfassend eine untere Schneidkante (37) aufweist;
   - eine auf der Säule (12) gleitende Hülse (14), welche einen Teil eines zweiten Klammerelementes (15) ausbildet, mit welchem ein oberer Klingenhalter (31) einstückig ist, welcher obere Klingenhalter (31) eine Hauptachse (21) und eine obere Klinge (33) umfassend eine obere Schneidkante (36), aufweist,
   wobei das erste (13) und zweite (15) Klammerelement einstückig durch entsprechende Kurbelzapfen (16A und 16), welche entlang von kreisförmigen Linien (17A und 17) laufen, mit Getrieberitzeln (18A und 18) verbunden sind, welche Getrieberitzel (18A und 18) durch eine eigene Motoreinrichtung angetrieben sind, so daß diese oberen (33) und unteren (34) Klingen relativ zueinander entlang von geraden Linien (10, 10A) bewegbar sind, welche im wesentlichen parallel zueinander und um einen Abstand (d) voneinander beabstandet sind, welcher als eine Funktion der Dicke (s) und der Natur des zu schneidenden Materials berechnet ist, wobei ein Paar von senkrechten Kräften Fx und Fy auf die Schneidkanten (36, 37) angelegt sind, worin die Kraft Fy entlang der geraden Linien (10, 10A) normal auf die Ebene, auf welcher das zu schneidende Material (35) abgelegt ist, wirkt, dadurch gekennzeichnet, daß der Neigungswinkel ($\alpha$) der Hauptachsen (21, 20) der Klingenhalter (31, 32 und 39, 39A) relativ zu im wesentlichen parallelen geraden Linien (10, 10A) normal auf die Ebene, auf welcher das Metallblatt (35) abgelegt ist, im Bereich von 10° bis 8° liegt, so daß die Klingenhalter (31, 32) den maximalen Wert ihres Trägheitsmomentes während des Biegens in nur einer Richtung ausüben, welche Richtung mit der Richtung der Kraft $F_R$, welche die von der vektoriellen Zusammensetzung dar Kräfte Fx und Fy Resultierende ist, zusammenfällt.

2. Vorrichtung nach Anspruch 1, dadurch gekennzeichnet, daß die Klingenhalter (31, 32 und 39, 39A) einen Teil einer Schere der Rotationstype (11, 45) zum Schneiden eines Metallblattes (35) darstellen, in welcher sowohl der untere Klingenhalter (32, 39A) als auch der obere Klingenhalter (31, 39) ihre Hauptachse (20, 21) mit der Richtung der resultierenden Kraft $F_R$ zusammenfallend aufweisen.

3. Vorrichtung nach Anspruch 1, dadurch gekennzeichnet, daß der Neigungswinkel ($\alpha$) der Hauptachsen (21, 20) der Klingenhalter (31, 32 und 39, 39A) relativ zu den im wesentlichen parallelen Linien (10, 10A) normal auf die Ebene, auf welcher zu schneidendes, nicht-metallisches Material (35) abgelegt ist, Werte von bis zu 20° erreichen kann.

4. Vorrichtung nach Anspruch 2, dadurch gekennzeichnet, daß zumindest einer der Klingenhalter (32) Einrichtungen (18, 19) zum Einstellen des zwischen den zwei Klingen (33, 34) bestehenden Abstandes "d" zugeordnet ist.

5. Vorrichtung nach Anspruch 4, dadurch gekennzeichnet, daß die Einstellung des zwischen den zwei Klingen (33, 34) bestehenden Abstandes "d" durch Ändern des Wertes des Neigungswinkels ($\alpha$) mittels eines Exzenters (18) erreicht wird, welcher zum Einstellzeitpunkt im Inneren eines Loches (19), welches an dem unteren Klingenhalter (32) vorgesehen ist, rotiert.

6. Vorrichtung nach einem oder mehreren der vorhergenden Ansprüche und welche mit Klingenhaltern (39, 39A) vom Walzentypus ausgestattet ist, welche sich relativ zu einer Drehachse (40, 40A) drehen, dadurch gekennzeichnet, daß sowohl der untere Klingenhalter (39A) als auch der obere Klingenhaltar (39) ihre entsprechende Hauptachse (20, 21) mit der Richtung der resultierenden Kraft $F_R$, welche durch die Drehachsen (40 und 40A) verläuft, zusammenfallend aufweisen.

## Revendications

1. Cisaille à lames rotatives, destinée à cisailler des éléments laminaires (35) ou similaires, comprenant :

- une colonne de guidage (12), dont une extrémité est fixén de façon solidaire à une première console (13) destinée à supporter un bras de scie (32) inférieur possédant un axe principal (20), le bras de scie (32) inférieur possédant une lame (34) inférieure comprenant un bord de coupe (37) inférieur ;

un manchon (14), coulissant sur la colonne (12), qui fait partie d'une deuxième console (15) avec laquelle un bras de scie (31) supérieur est solidaire, le bras de scie (31) supérieur possédant un axe principal (21) et une lame (33) supérieure comprenant un bord de coupe (36) supérieur,

la première (13) et la deuxième (15) consoles étant liées de façon solidaire, par l'intermédiaire de tourillons (16A et 16) parcourant des trajectoires circulaires (17A et 17), avec des engrenages (18A et 18), engrenages (18A et 18) qui sont entraînés par un moteur spécifique, de telle sorte que les lames supérieure (33) et inférieure (34) soient relativement mobiles le long de lignes droites (10, 10A) sensiblement parallèles l'une à l'autre et espacées l'une de l'autre selon une distance (d) calculée en fonction de l'épaisseur (s) et de la nature du matériau destiné à être cisaillé, une paire de forces perpendiculaires Fx et Fy étant appliquée sur les bords de coupe (36, 37), la force Fy agissant le long des lignes droites (10, 10A) perpendiculairement au plan sur lequel repose le matériau (35) à cisailler, caractérisée en ce que l'angle ($\alpha$) d'inclinaison des deux axes (21, 20) des bras de scie (31, 32 et 39, 39A), par rapport aux lignes droites (10, 10A), parallèles l'une à l'autre, perpendiculaires au plan sur lequel repose la feuille de métal (35), est compris entre 10° et 8°, de telle sorte que les bras de scie (31, 32) établissent la valeur maximum de leur moment d'inertie lorsqu'ils sont courbés dans une seule direction, cette direction étant coïncidente avec la direction de la force $F_R$, qui est la résultante dérivant de la composition vectorielle des forces Fx et Fy.

2. Cisaille selon la revendication 1, caractérisée en ce que les bras de scie (31, 32 et 39, 39A) font partie d'une cisaille de type rotatif (11, 45) destinée à cisailler une feuille de métal (35), dans laquelle l'axe principal (20, 21) du bras de scie (32, 39A) inférieur et du bras de scie (31, 39) supérieur est coïncident avec la direction de la force résultante $F_R$.

3. Cisaille selon la revendication 1, caractérisée en ce que l'angle ($\alpha$) d'inclinaison des deux axes (21, 20) des bras de scie (31, 32 et 39, 39A), par rapport aux lignes droites (10, 10A), parallèles l'une à l'autre, perpendiculaires au plan sur lequel repose un matériau non-métallique destiné à être cisaillé, peut atteindre des valeurs s'élevant jusqu'à 20°.

4. Cisaille selon la revendication 2, caractérisée en ce qu'au moins l'un des bras de scie (32) est associé à des moyens (18, 19) permettant l'ajustement de la distance "d" existant entre les deux lames (33, 34).

5. Cisaille selon la revendication 4, caractérisée en ce que le réglage de la distance "d" existant entre les lames (33, 34) est obtenu en modifiant la valeur de l'angle ($\alpha$) d'inclinaison au moyen d'un excentrique (18), qui, au moment du réglage, tourne à l'intérieur d'une cavité (19) ménagée sur le bras de soie (32) inférieur.

6. Cisaille selon l'une ou plusieurs des revendications précédentes, et équipée de bras de scie (39, 39A) du type rotatif, tournant par rapport à des axes de révolution (40, 40A), caractérisée en ce que l'axe principal (20, 21) respectif du bras de scie (39A) inférieur et du bras de soie (39) supérieur est coïncident avec la direction des forces résultantes $F_R$ traversant les axes de révolution (40 et 40A).

# Fig.1

# Fig.2

# Fig.4

# Fig.3

Fig.5

Fig.6